# EUROPEAN PATENT SPECIFICATION

(11) **EP 2 651 158 B1**
(45) Date of publication and mention of the grant of the patent: **03.09.2014**
(21) Application number: 11847120.0
(22) Date of filing: 06.12.2011
(51) Int. Cl.: H04L 12/24

(54) **METHOD AND SYSTEM FOR BATCH UPGRADE OF BASE STATIONS**
VERFAHREN UND SYSTEM ZUR BATCH-AKTUALISIERUNG VON BASISSTATIONEN
PROCÉDÉ ET SYSTÈME PERMETTANT UNE MISE À NIVEAU PAR LOTS DE STATIONS DE BASE

(30) Priority: 07.12.2010 CN 201010577262
(43) Date of publication of application: 16.10.2013
(73) Proprietor: Huawei Technologies Co., Ltd., Shenzhen, Guangdong 518129 (CN)
(72) Inventor: ZHOU, Rongguo, Shenzhen Guangdong 518129 (CN)
(74) Representative: Isarpatent
(86) International application number: PCT/CN2011/083538
(87) International publication number: WO 2012/075929

(56) References cited:
- WO-A1-2009/088327
- CN-A- 101 136 773
- CN-A- 101 653 016
- CN-A- 101 877 918
- CN-A- 101 877 918
- CN-A- 102 045 744
- US-A1- 2002 007 468
- US-A1- 2009 119 655

## Description

### Field of the Invention

The present invention relates to communication technologies, and more particularly, to a method and a system for batch upgrading of base stations.

### Background of the Invention

In a wireless communication system, a software version of a base station is usually needed to be upgraded so as to add a new function or to patch a bug. In order to make a new version of software to come into effect, a base station needs to be reset. During the resetting period, the base station will interrupt services. For example, services of online subscribers including calls, data downloads and so on will be interrupted, and access of offline subscribers will fail during the resetting period.

In order to solve the problem of interruption of services during a resetting period of a base station, a method in the prior art is to reduce time for a base station to be reset as much as possible, that is to say, the method in the prior art is to try to compress time that is needed for each step during a resetting process, thereby time of interruption of services will be reduced. This method was called as a micro-damage upgrading method.

As there are relatively many steps in a resetting process of a base station, including powering up a hardware, self-testing, loading a software to a memory or to a chip, initializing software, initializing configuration data, establishing a link on each single panel, and checking version and so on, wherein time that is needed for each step can not continue to be compressed after being compressed to a certain level, though time of interruption of services during a resetting period of a base station can be reduced by adopting the micro-damage upgrading method, it can not be reduced to zero. According to the prior art, upgrading of a base station will lead to a service interruption time of around three minutes. During this period, existing services of subscribers will be interrupted and access of new services will fail.

### Summary of the Invention

The embodiments of the present invention provide a method for batch upgrading of base stations and an element management system that can avoid the problem of interruption of existing services or access failure of new services during upgrading of a base station as much as possible.

A method for batch upgrading of base stations, comprising:
dividing all base stations to be upgraded into several base station clusters, wherein any base station and its adjacent base stations are located in different base station clusters respectively;
obtaining an upgrading sequence of the several base station clusters;
determining a base station cluster to be upgraded according to the upgrading sequence, and handing over accessed services of all base stations in the base station cluster to be upgraded to the adjacent base stations located in different base station clusters; and
upgrading all of the base stations in the base station cluster to be upgraded at a same time.

An element management system, comprising
a base station cluster processing module, for dividing all base stations to be upgraded into several base station clusters, wherein any base station and its adjacent base stations are located in different base station clusters respectively, and obtaining an upgrading sequence of the several base station clusters;
a service processing module, for determining a base station cluster to be upgraded according to the upgrading sequence, and handing over accessed services of all base stations in the base station cluster to be upgraded to the adjacent base stations located in different base station clusters; and
an upgrading executing module, for upgrading all of the base stations in the base station cluster to be upgraded at a same time.

The embodiments of the present invention adopt technical solutions of dividing all base stations to be upgraded into several base station clusters, upgrading base stations in a same base station cluster at a same time, and upgrading different base station clusters in time order, wherein before each base station cluster is upgraded, accessed services of the base station cluster are handed over to other base stations. As a result, when one base station is upgraded, services of the base station can be handed over to adjacent base stations of the base station, and new services can also be accessed from its adjacent base stations, so the problem of interruption of existing services or access failure of new services during upgrading of a base station is avoided.

Attention is drawn to the document EP 2 426 975 A1 which is later published version of earlier document CN 101 877 918 A.

EP 2 426 975 A1 discloses a method for batch upgrading of base stations (par. 17, par. 36-37: next dynamic clustering scheduling of base stations corresponds to batch upgrading of base stations; since "upgrading" is not specified in any further detail, it can be interpreted in a very broad way; hence, dynamic re-clustering scheduling can be interpreted as a form of batch upgrading). In particular, the method comprises the steps of:
dividing all base stations to be upgraded into several base station clusters (par. 17), wherein any base station and its adjacent base stations are located in different base station clusters respectively (par. 17 and Fig. 4, and par. 81 to 82: base station clusters (2,3) and (1,4), wherein base stations 4 and 2 and 3 adjacent to 4 are located in different base station clusters, respectively);
obtaining an upgrading sequence of the several base station clusters (par. 81 to 82 and table 2; wherein clustering parameters Li listed in table 2 corresponds to an upgrading sequence);
determining a base station cluster to be upgraded according to the upgrading sequence (par. 82); and
upgrading all of the base stations in the base station cluster to be upgraded at a same time (par. 82 and 20; implicit feature thereof).

### Brief Description of the Drawings

Figure 1 is a flow chart of a method for batch upgrading of base stations according to the embodiments of the present invention;
Figure 2 is a schematic diagram of division of base station clusters in the method according to the embodiments of the present invention; and
Figure 3 is a logical structure diagram of an element management system according to the embodiments of the present invention.

### Detailed Description of the Embodiments

The embodiments of the present invention provide a method for batch upgrading of base stations, and the method is implemented on the basis of the following principles.

As base station cells of a mobile communication system adopt cellular coverage, and each base station cell has a plurality of adjacent base station cells which cover part area of the base station cell. An element management system (Element management System, EMS) can divide batch of base stations to be upgraded into several base station clusters to make any base station and its several adjacent base stations to be located in different base station clusters respectively, wherein each of the base station clusters includes several base stations. In this case, maximum services of a base station in each of the base station clusters can be handed over to adjacent base stations of the base station in other base station clusters. Based on the above-mentioned division of base station clusters, the following upgrading strategy can be adopted: upgrading the respective base station clusters successively in time order, and guaranteeing that only one base station cluster is upgraded at a same time; while upgrading base stations in a same base station cluster at a same time; and before upgrading each base station cluster, handing over existing services of all base stations in the base station cluster to their adjacent base stations in different base station clusters. By adopting the above-mentioned method, before any base station cluster is upgraded, accessed services of all base stations in the base station cluster have been handed over to their adjacent base stations, thereby guaranteeing that accessed services are not interrupted in an upgrading process and new services can also be accessed via their adjacent base stations. The embodiments of the present invention also provide an element management system accordingly. They are described in detail below respectively.

### Embodiment 1

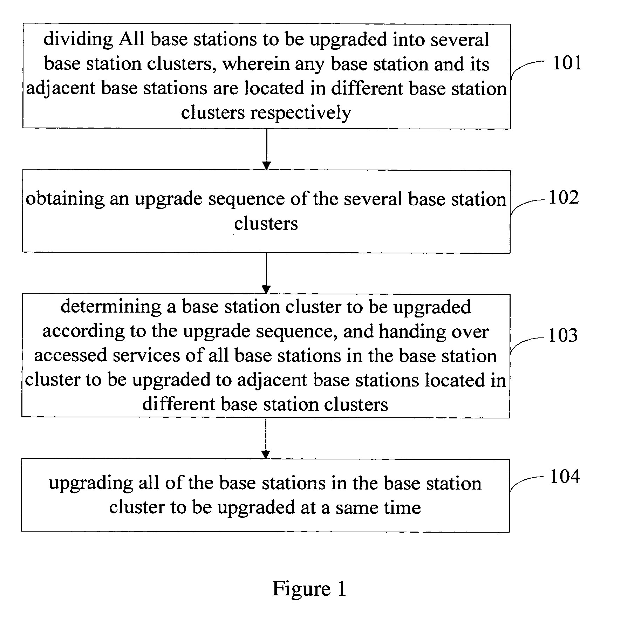

Please refer to figure 1, the embodiments of the present invention provide a method for batch upgrading of base stations, comprising the following steps.
110, EMS divides all base stations to be upgraded into several base station clusters, wherein any base station and its adjacent base stations are located in different base station clusters respectively.

A dividing principle of base station clusters is to try to divide base stations that are adjacent and can hand over services with each other into different base station clusters, and a specific dividing strategy is to divide any base station and its several adjacent base stations into different base station clusters.
120, the EMS obtains an upgrading sequence of the several base station clusters;

The EMS can determine an upgrading sequence of the respective base station clusters randomly on its own, can also determine an upgrading sequence of the respective base station clusters according to a preset strategy, and can generate an upgrading sequence of the respective base station clusters according to an input command of an administrator as well. After the upgrading sequence is determined, the EMS will upgrade the respective base station clusters successively according to the upgrading sequence.
130, the EMS determines a base station cluster to be upgraded according to the upgrading sequence, and hands over accessed services of all base stations in the base station cluster to be upgraded to adjacent base stations located in different base station clusters.

Before starting an upgrading step of one base station cluster to be upgraded, the EMS executes a handover step of accessed services at first, thereby guaranteeing that this part of accessed services have be accessed via adjacent base stations without being interrupted during the following upgrading processes.
140, upgrades all of the base stations in the base station cluster to be upgraded at a same time.

In the present step, all base stations in the base station cluster to be upgraded can be upgraded according to a prior method.

It should be noted that step 130 and step 140 will be executed circularly. A next base station cluster starts to be upgraded after one base station cluster is upgraded and reset, until all of the respective base station clusters are upgraded.

It should be explained that when being upgraded, different base station clusters are reset serially and base stations in a same base station cluster are reset in parallel, and by cyclic scheduling, resetting of base stations in all base station clusters are completed serially, therefore a purpose of completing upgrades of all base stations to be upgraded can be achieved.

By adopting the method of the present embodiment, in a batch upgrading process of base stations, the EMS can divide all base stations into several base station clusters and upgrade them successively, wherein before any base station cluster is upgraded, accessed services of all base stations in the base station cluster have been handed over to their adjacent base stations, thereby guaranteeing that accessed services are not interrupted in an upgrading process and new services can also be accessed via their adjacent base stations. In practical evaluations, at a hot spot, at least eighty five percent of accessed services of a base station cluster to be upgraded can be handed over to adjacent base stations successfully, and meanwhile at least eighty five percent of new services of a cell where the base station cluster is in can be accessed via adjacent base stations.

### Embodiment 2

In the present embodiment, step 110 can have several preferred solutions.

In one preferred solution, step 110 can specifically comprises the following steps.
111, the EMS obtains neighbour relation lists and data of performance counters of the base stations to be upgraded, wherein the data of performance counters comprise number of service handovers and a handover success rate between any base station and its adjacent base stations within a preset period of time.

In the present step, the EMS collects and obtains data that are needed for performing division of base station clusters, comprising: a, obtaining data of performance counters of all base stations to be upgraded, which include the number of handovers and the handover success rate of services between adjacent base stations; b, obtaining neighbour relation lists of all base stations to be upgraded; c, data mergence processing, which constructs a data structure with the neighbour relation lists and merged data of performance counters which together serve as basis of division of base station clusters, wherein the neighbour relation lists are served as primary measurement data and the merged data of performance counters are served as secondary measurement data.
112, the EMS divides the base stations to be upgraded into several base station clusters according to the neighbour relation lists and the data of performance counters of the base stations to be upgraded to make any base station and its adjacent base stations to be located in different base station clusters respectively.

In the present step, the EMS divides base station clusters specifically according to the obtained data, it can divide base station clusters passively according to input commands of an administrator, and it can also divide base station clusters after making an analysis according to a pre-configured algorithm.

In another preferred solution, step 110 can also specifically comprises the following steps:
113, obtaining neighbour relation lists and associated configuration parameters of the base stations to be upgraded.
114, dividing the base stations to be upgraded into several base station clusters according to the neighbour relation lists and the associated configuration parameters of the base stations to be upgraded to make any base station and its adjacent base stations to be located in different base station clusters respectively.

The difference between the present preferred solution and the former preferred solution is that the EMS divides base station clusters by utilizing engineering parameter data, wherein the engineering parameter data comprise neighbour relation lists and associated configuration parameters of the base stations, and it can be obtained from a network deployment plan when networking. The base station clusters are divided by taking the neighbour relation lists as primary measurement data and taking the associated configuration parameters of the base stations, such as a power, an antenna direction and the like, as secondary measurement data.

By adopting the two preferred solutions of the present embodiment, when the EMS divides base stations, the neighbour relation lists are served as primary measurement data, and the data of performance counters and the engineering parameter data are served as secondary measurement data, respectively, which can reflect close connections of the respective base stations in history relationship and on special structure respectively.

### Embodiment 3

In the present embodiment, step 130 can have several preferred solutions.

In one preferred solution, in step 130, the step of handing over accessed services of all base stations in the base station cluster to be upgraded to adjacent base stations located in a different base station clusters can specifically be:
reducing powers of all base stations in the base station cluster to be upgraded gradually to make accessed services of the base station cluster to be upgraded to be handed over to adjacent base stations located in different base station clusters spontaneously.

In the preferred solution, the EMS reduces a power of a base station gradually, and when the power of the base station is lower than that of an adjacent base station of the base station, accessed services of a subscriber will be handed over to the adjacent base station spontaneously, and the base station will not have new services to be accessed. The preferred solution is easy to be implemented.

In another preferred solution, in step 130, the step of handing over accessed services of all base stations in the base station cluster to be upgraded to adjacent base stations located in a different base station clusters can specifically be:
sending service handover commands to all base stations in the base station cluster to be upgraded, and handing over accessed services of the base station cluster to be upgraded to adjacent base stations located in different base station clusters compulsorily.

In the preferred solution, the EMS directly sends a command to a base station or to a base station controller of a base station, when the base station receives the handover designation, the base station is asked to hand over accessed services of a subscriber to its adjacent base stations compulsorily and to prohibit access of new services. The preferred solution will increase extra expenses, but its consuming time is shorter than that of the former preferred solution.

### Embodiment 4

In the present embodiment, the division of base station clusters is described in detail.

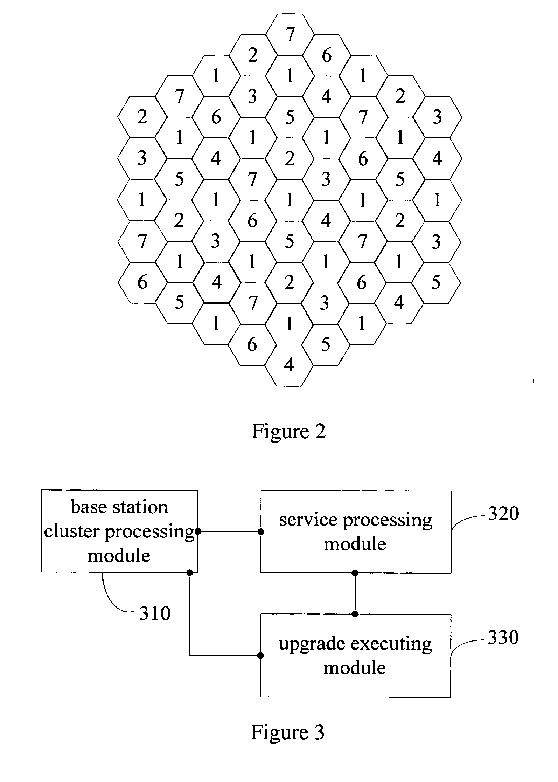

Please refer to figure 2, a general cellular system divides a coverage domain into several regular hexagon base station cells, wherein each base station cell has six adjacent base station cells. As a result, when base stations of the cellular system are upgraded, all of the base stations can be divided into seven base station clusters, wherein one base station and its six adjacent base stations are located in different base station clusters respectively. As shown in the figure, all of base stations of a cell denoted as 1 are divided into base station cluster 1, similarly, base stations of cells denoted as 2-6 are divided into base station clusters 2-6 respectively. By adopting the method for dividing base station clusters, when one base station cluster, such as base station cluster 1, is upgraded, any base station in it can hand over accessed services to its six adjacent base stations to achieve non-interruption of services.

It should be appreciated that as the regular hexagon cell is just a special case, the shape of a cell can probably be of other regular or irregular shapes, and according to a network plan, a relationship of a cell with surrounding cells, or a geographical shape that a cell covers, there should be different methods for dividing base station clusters. It should be explained that any dividing method that can implement dividing, as much as possible, adjacent base stations that can hand over services with each other into different base station clusters should be involved in the scope of the present invention.

### Embodiment 5

Please refer to figure 3, the present embodiment provides an element management system, comprising
a base station cluster processing module 310, for dividing all base stations to be upgraded into several base station clusters, wherein any base station and its adjacent base stations are located in different base station clusters respectively, and obtaining an upgrading sequence of the several base station clusters;
a service processing module 320, for determining a base station cluster to be upgraded according to the upgrading sequence, and handing over accessed services of all base stations in the base station cluster to be upgraded to adjacent base stations located in different base station clusters; and
an upgrading executing module 330, for upgrading all of the base stations in the base station cluster to be upgraded at a same time.

Furthermore, the service processing module 320 is also used for prohibiting all base stations in the base station cluster to be upgraded from accessing new services.

By adopting the element management system of the present embodiment, in a batch upgrading process of base stations, all base stations can be divided into several base station clusters to be upgraded successively, and before any base station cluster is upgraded, accessed services of all base stations in the base station cluster have been handed over to their adjacent base stations, thereby guaranteeing that accessed services are not interrupted in an upgrading process and new services can also be accessed via their adjacent base stations.

It should be appreciated for those skilled in the art that all or part of the steps in the respective methods of the above-mentioned embodiments can be implemented by using corresponding hardware controlled with a program, and the program can be stored in a computer readable storage medium, such as a read-only memory, a random access memory, a compact disc, a digital video disk or the like.

The foregoing makes detailed introduction on the method for batch update of base stations and the element management system provided in the embodiments of the present invention. The present application makes illustration on the principles and the implementations of the present invention by utilizing specific examples. The illustration of the above-mentioned embodiments is only used for helping to understand the method and the central concept thereof; meanwhile, based on the concept of the present invention, changes will be made on both the specific implementations and the application scope by those skilled in the art. In summary, the content of the present description will not be understood as limitation on the present invention.

## Claims

1. A method for batch upgrading of base stations, **characterized by**, comprising:
dividing (110) all base stations to be upgraded into several base station clusters, wherein any base station and its adjacent base stations are located in different base station clusters respectively;
obtaining (120) an upgrading sequence of the several base station clusters;
determining (130) a base station cluster to be upgraded according to the upgrading sequence, and handing over accessed services of all base stations in the base station cluster to be upgraded to adjacent base stations located in different base station clusters; and
upgrading (140) all of the base stations in the base station cluster to be upgraded at a same time.

2. The method of Claim 1, wherein the dividing (110) all base stations to be upgraded into several base station clusters, comprising:
obtaining neighbour relation lists and data of performance counters of the base stations to be upgraded, wherein the data of performance counters comprise number of service handovers and a handover success rate between any base station and its adjacent base stations within a preset period of time; and
dividing the base stations to be upgraded into several base station clusters according to the neighbour relation lists and the data of performance counters of the base stations to be upgraded.

3. The method of Claim 1, wherein the dividing (110) all base stations to be upgraded into several base station clusters, comprising:
obtaining neighbour relation lists and associated configuration parameters of the base stations to be upgraded; and
dividing the base stations to be upgraded into several base station clusters according to the neighbour relation lists and the associated configuration parameters of the base stations to be upgraded.

4. The method of Claim 1, wherein the handing over accessed services of all base stations in the base station cluster to be upgraded to adjacent base stations located in different base station clusters, comprising:
reducing powers of all base stations in the base station cluster to be upgraded gradually to make accessed services of the base station cluster to be upgraded to be handed over to the adjacent base stations located in different base station clusters spontaneously; or
sending service handover commands to all base stations in the base station cluster to be upgraded, and handing over accessed services of the base station cluster to be upgraded to the adjacent base stations located in different base station clusters compulsorily.

5. The method of any one of Claims 1 to 4, before the upgrading (140) all of the base stations in the base station cluster to be upgraded at a same time, further comprising:
prohibiting all base stations in the base station cluster to be upgraded from accessing new services.

6. The method of any one of Claims 1 to 4, wherein
when a base station cell is a regular hexagon cell, all of the base stations to be upgraded are divided into seven base station clusters, wherein any base station and its six adjacent base stations are located in different base station clusters respectively.

7. An element management system, **characterized by**, comprising:
a base station cluster processing module (310), configured to divide all base stations to be upgraded into several base station clusters, wherein any base station and its adjacent base stations are located in different base station clusters respectively, and to obtain an upgrading sequence of the several base station clusters;
a service processing module (320), configured to determine a base station cluster to be upgraded according to the upgrading sequence, and to hand over accessed services of all base stations in the base station cluster to be upgraded to the adjacent base stations located in different base station clusters; and
an upgrading executing module (330), configured to upgrade all of the base stations in the base station cluster to be upgraded at a same time.

8. The system of Claim 7, wherein the service processing module (320) is further configured to prohibit all base stations in the base station cluster to be upgraded from accessing new services.

## Patentansprüche

1. Verfahren zur "Batch"-Aktualisierung von Basisstationen, **dadurch gekennzeichnet, dass** es umfasst:
Einteilen (110) aller zu aktualisierenden Basisstationen in mehrere Basisstations-Cluster, wobei sich jede Basisstation und ihre benachbarten Basisstationen jeweils in unterschiedlichen Basisstations-Clustern befinden;
Beziehen (120) einer Aktualisierungssequenz der mehreren Basisstations-Cluster;
Bestimmen (130) eines zu aktualisierenden Basisstations-Clusters gemäß der Aktualisierungssequenz, und Übergeben abgerufener Dienste aller Basisstationen in dem zu aktualisierenden Basisstations-Cluster an benachbarte Basisstationen, welche sich in unterschiedlichen Basisstations-Clustern befinden; und
gleichzeitiges Aktualisieren (140) aller Basisstationen in dem zu aktualisierenden Basisstations-Cluster.

2. Verfahren nach Anspruch 1, wobei das Einteilen (110) aller zu aktualisierenden Basisstationen in mehrere Basisstations-Cluster Folgendes umfasst:
Beziehen von Nachbarbeziehungslisten und Daten von Leistungszählern der zu aktualisierenden Basisstationen, wobei die Daten von Leistungszählern die Anzahl von Dienstübergaben und eine Übergabeerfolgsrate zwischen einer beliebigen Basisstation und ihren benachbarten Basisstationen innerhalb einer voreingestellten Zeitspanne umfassen; und
Einteilen der zu aktualisierenden Basisstationen in mehrere Basisstations-Cluster gemäß den Nachbarbeziehungslisten und den Daten von Leistungszählern der zu aktualisierenden Basisstationen.

3. Verfahren nach Anspruch 1, wobei das Einteilen (110) aller zu aktualisierenden Basisstationen in mehrere Basisstations-Cluster Folgendes umfasst:
Beziehen von Nachbarbeziehungslisten und zugehörigen Konfigurationsparametern der zu aktualisierenden Basisstationen; und
Teilen der zu aktualisierenden Basisstationen in mehrere Basisstations-Cluster gemäß den Nachbarbeziehungslisten und den zugehörigen Konfigurationsparametern der zu aktualisierenden Basisstationen.

4. Verfahren nach Anspruch 1, wobei das Übergeben von abgerufenen Diensten aller Basisstationen in dem zu aktualisierenden Basisstations-Cluster an benachbarte Basisstationen, welche sich in unterschiedlichen Basisstations-Clustern befinden, Folgendes umfasst:
stufenweises Reduzieren der Leistung aller Basisstationen in dem zu aktualisierenden Basisstations-Cluster, um dafür zu sorgen, dass die abgerufenen Dienste des zu aktualisierenden Basisstations-Clusters spontan an die benachbarten Basisstationen übergeben werden, welche sich in unterschiedlichen Basisstations-Clustern befinden; oder
Senden von Dienstübergabekommandos an alle Basisstationen in dem zu aktualisierenden Basisstations-Cluster, und zwangsweises Übergeben abgerufener Dienste des zu aktualisierenden Basisstations-Clusters an die benachbarten Basisstationen, welche sich in unterschiedlichen Basisstations-Clustern befinden.

5. Verfahren nach einem der Ansprüche 1 bis 4, welches vor dem gleichzeitigen Aktualisieren (140) aller Basisstationen in dem zu aktualisierenden Basisstations-Cluster ferner Folgendes umfasst:
alle Basisstationen in dem zu aktualisierenden Basisstations-Cluster daran zu hindern, auf neue Dienste zuzugreifen.

6. Verfahren nach einem der Ansprüche 1 bis 4, wobei,
wenn es sich bei einer Basisstationszelle um eine reguläre sechseckige Zelle handelt, alle zu aktualisierenden Basisstationen in sieben Basisstations-Cluster eingeteilt werden, wobei sich jede Basisstation und ihre sechs benachbarten Basisstationen jeweils in unterschiedlichen Basisstations-Clustern befinden.

7. Elementverwaltungssystem, **dadurch gekennzeichnet, dass** es umfasst:
ein Basisstations-Cluster-Verarbeitungsmodul (310), das dafür konfiguriert ist, alle zu aktualisierenden Basisstationen in mehrere Basisstations-Cluster einzuteilen, wobei sich jede Basisstation und ihre benachbarten Basisstationen jeweils in unterschiedlichen Basisstations-Clustern befinden, und dafür konfiguriert ist, eine Aktualisierungssequenz der mehreren Basisstations-Cluster zu beziehen;
ein Diensteverarbeitungsmodul (320), das dafür konfiguriert ist, einen zu aktualisierenden Basisstations-Cluster gemäß der Aktualisierungssequenz zu bestimmen und abgerufene Dienste aller Basisstationen in dem zu aktualisierenden Basisstations-Cluster an die benachbarten Basisstationen zu übergeben, welche sich in unterschiedlichen Basisstations-Clustern befinden; und
ein Aktualisierungsausführungsmodul (330), das dafür konfiguriert ist, alle Basisstationen in dem zu aktualisierenden Basisstations-Cluster gleichzeitig zu aktualisieren.

8. System nach Anspruch 7, wobei das Diensteverarbeitungsmodul (320) ferner dafür konfiguriert ist, alle Basisstationen in dem zu aktualisierenden Basisstations-Cluster daran zu hindern, auf neue Dienste zuzugreifen.

## Revendications

1. Procédé pour la mise à niveau par lots de stations de base, **caractérisé en ce qu'**il comprend:
la division (110) de toutes les stations de base devant être mises à niveau en plusieurs grappes de stations de base, dans lequel une station de base quelconque et les stations de base qui lui sont adjacentes sont respectivement situées dans différentes grappes de stations de base ;
l'obtention (120) d'une séquence de mise à niveau des plusieurs grappes de stations de base ;
la détermination (130) d'une grappe de stations de base devant être mises à niveau conformément à la séquence de mise à niveau, et le transfert de services accessibles de toutes les stations de base de la grappe de stations de base devant être mises à niveau aux stations de base adjacentes situées dans différentes grappes de stations de base ; et
la mise à niveau (140) de toutes les stations de base de la grappe de stations de base devant être mises à niveau à un même instant.

2. Procédé selon la revendication 1, dans lequel la division (110) de toutes les stations de base devant être mises à niveau en plusieurs grappes de stations de base, comprend :
l'obtention de listes de relations de voisinage et de données de compteurs de performances des stations de base devant être mises à niveau, dans lequel les données de compteurs de performances comprennent un nombre de transferts de services et un taux de réussite des transferts entre une station de base quelconque et les stations de base qui lui sont adjacentes au cours d'une période de temps prédéfinie ; et
la division des stations de base devant être mises à niveau en plusieurs grappes de stations de base conformément aux listes de relations de voisinage et aux données de compteurs de performances des stations de base devant être mises à niveau.

3. Procédé selon la revendication 1, dans lequel la division (110) de toutes les stations de base devant être mises à niveau en plusieurs grappes de stations de base, comprend :
l'obtention de listes de relations de voisinage et de paramètres de configuration associés des stations de base devant être mises à niveau ; et
la division des stations de base devant être mises à niveau en plusieurs grappes de stations de base conformément aux listes de relations de voisinage et aux paramètres de configuration associés des stations de base devant être mises à niveau.

4. Procédé selon la revendication 1, dans lequel le transfert de services accessibles de toutes les stations de base de la grappe de stations de base devant être mises à niveau aux stations de base adjacentes situées dans différentes grappes de stations de base, comprend :
la réduction progressive des puissances de toutes les stations de base de la grappe de stations de base devant être mises à niveau pour faire en sorte que les services accessibles de la grappe de stations de base devant être mises à niveau soient spontanément transférés aux stations de base adjacentes situées dans différentes grappes de stations de base ; ou
l'envoi de commandes de transfert de services à toutes les stations de base de la grappe de stations de base devant être mises à niveau, et le transfert obligatoire de services accessibles de la grappe de stations de base devant être mises à niveau aux stations de base adjacentes situées dans différentes grappes de stations de base.

5. Procédé selon l'une quelconque des revendications 1 à 4, avant la mise à niveau (140) de toutes les stations de base de la grappe de stations de base devant être mises à niveau à un même instant, comprenant en outre :
le fait d'interdire à toutes les stations de base de la grappe de stations de base devant être mises à niveau d'accéder à de nouveaux services.

6. Procédé selon l'une quelconque des revendications 1 à 4, dans lequel lorsqu'une cellule de station de base est une cellule hexagonale régulière, la totalité des stations de base devant être mises à niveau sont divisées en sept grappes de stations de base, dans lequel une station de base quelconque et les six stations de base qui lui sont adjacentes sont respectivement situées dans différentes grappes de stations de base.

7. Système de gestion d'éléments, **caractérisé en ce qu'**il comprend:
un module de traitement de grappe de stations de base (310), configuré pour diviser toutes les stations de base devant être mises à niveau en plusieurs grappes de stations de base, dans lequel une station de base quelconque et les stations de base qui lui sont adjacentes sont respectivement situées dans différentes grappes de stations de base, et pour obtenir une séquence de mise à niveau des plusieurs grappes de stations de base ;
un module de traitement de service (320), configuré pour déterminer une grappe de stations de base devant être mises à niveau en fonction de la séquence de mise à niveau, et pour transférer des services accessibles de toutes les stations de base de la grappe de stations de base devant être mises à niveau aux stations de base qui lui sont adjacentes situées dans différentes grappes de stations de base ; et
un module d'exécution de mise à niveau (330), configuré pour mettre à niveau l'ensemble des stations de base de la grappe de stations de base devant être mises à niveau à un même instant.

8. Système selon la revendication 7, dans lequel le module de traitement de service (320) est en outre configuré pour interdire à toutes les stations de base de la grappe de stations de base devant être mises à niveau d'accéder à de nouveaux services.
